# EUROPÄISCHE PATENTSCHRIFT

(11) **EP 4 014 271 B1**
(45) Veröffentlichungstag und Bekanntmachung des Hinweises auf die Patenterteilung: **27.09.2023**
(21) Anmeldenummer: 20742159.5
(22) Anmeldetag: 03.07.2020
(51) Int. Cl.: H01M 8/18

(54) **ELEKTRODENEINHEIT UND REDOX-FLOW-ZELLE**
ELECTRODE UNIT AND REDOX-FLOW CELL
UNITÉ D'ÉLECTRODE ET CELLULE À FLUX REDOX

(30) Priorität: 12.08.2019 DE 102019121673
(43) Veröffentlichungstag der Anmeldung: 22.06.2022
(73) Patentinhaber: Schaeffler Technologies AG & Co. KG, 91074 Herzogenaurach (DE)
(72) Erfinder: DOBRENIZKI, Ladislaus, 91315 Höchstadt (DE); WEGENER, Moritz, 91058 Erlangen (DE); LANDMANN, Johannes, 90409 Nürnberg (DE); HOSENFELDT, Tim, 90480 Nürnberg (DE)
(86) Internationale Anmeldenummer: PCT/DE2020/100589
(87) Internationale Veröffentlichungsnummer: WO 2021/027988

(56) Entgegenhaltungen:
- WO-A1-2018/145720
- CN-B- 106 025 061
- DE-A1-102009 035 314
- MICHAEL NAGUIB ET AL: "MXene: a promising transition metal carbide anode for lithium-ion batteries", ELECTROCHEMISTRY COMMUNICATIONS, ELSEVIER, AMSTERDAM, NL, Bd. 16, Nr. 1, 3. Januar 2012 (2012-01-03) , Seiten 61-64, XP028454922, ISSN: 1388-2481, DOI: 10.1016/J.ELECOM.2012.01.002 [gefunden am 2012-01-09]

## Beschreibung

Die Erfindung betrifft eine Elektrodeneinheit einer Redox-Flow-Zelle, umfassend zumindest ein metallisches Substrat und eine Beschichtung, welche auf dem Substrat aufgebracht ist. Weiterhin betrifft die Erfindung eine Redox-Flow-Zelle mit mindestens einer solchen Elektrodeneinheit.

Elektrodeneinheiten der eingangs genannten Art sowie damit ausgestattete Redox-Flow-Zellen, insbesondere Redox-Flow-Batterien oder Flussbatterien, sind hinreichend bekannt.

Die Redox-Flow-Batterie ist ein Speicher für elektrische Energie, wobei die elektrische Energie in flüssigen chemischen Verbindungen beziehungsweise Elektrolyten, einem sogenannten Anolyt und einem sogenannten Katholyt, gespeichert vorliegt. Die Elektrolyte befinden sich in zwei Reaktionsräumen, die durch eine Polymerelektrolytmembran voneinander getrennt sind. Über diese Membran erfolgt ein Ionenaustausch zwischen Anolyt und Katholyt, wobei elektrische Energie frei wird. Die frei werdende elektrische Energie wird über je eine Elektrodeneinheit, die in Kontakt zum Anolyten und Katholyten steht, abgegriffen. Die Elektrolyte werden in den Reaktionsräumen mittels Pumpen jeweils zirkuliert und fließen an der jeweiligen zugewandten Oberfläche der Membran entlang. Da die Elektrolyte in beliebig groß ausgeführten Tanks gespeichert werden können, ist die in der Redox-Flow-Batterie gespeicherte Energiemenge nur von der Größe der verwendeten Tanks abhängig.

Flussbatteriesysteme als Speichersysteme ermöglichen eine nachhaltige Energieversorgung für stationäre und mobile Anwendungsfelder mittels erneuerbarer Energien. Um hohe Wirkungsgrade und Leistungsdichten zu erreichen, werden möglichst kompakte Batteriestacks angestrebt. Hohe Leistungsdichten stellen jedoch große Herausforderungen an die einzelnen Komponenten eines Batteriestacks dar.

Die WO 2018/145720 A1 beschreibt eine Elektrodeneinheit der eingangs genannten Art sowie eine Redox-Flow-Batterie, in welcher die Elektrodeneinheit eingesetzt wird.

Dabei ist unter anderem beschrieben, das Substrat aus einem Kompositmaterial auszubilden.

Die WO 2018/146342 A1 offenbart verschiedene Elektrolyt-Zusammensetzungen auf Lignin-Basis zur Verwendung für Redox-Flow-Batterien.

Die Veröffentlichung "A biomimetic high-capacity phenazine-based anolyte for aqueous organic redox flow batteries", Aaron Hollas et al., Nature energy, Vol. 3, Juni 2018, Seiten 508 - 514, beschreibt Anolyte für Redox-Flow-Batterien auf Basis wässriger "organischer" Elektrolyte beziehungsweise auf Basis wässriger Elektrolyte mit einer redox-aktiven organischen Spezies. Diese gewinnen zunehmend an Bedeutung.

Derzeit werden als korrosionsbeständige Substrate für Elektrodeneinheiten von Redox-Flow-Batterien aufgrund der Verwendung stark basischer oder saurer Elektrolyte häufig plattenförmige Komposite aus Kunststoff und Graphit verwendet. Diese Substrate sind meist mit einer beidseitig aufgebrachten Kohlenstoffbeschichtung versehen oder es ist ein durchströmbarer Kohlenstoff-Filz zwischen der Membran und der Elektrodeneinheit vorhanden. Eine Gesamtplattendicke der Elektrodeneinheit im Bereich von etwa 0,7 - 1,2 mm ist dabei üblich. Solche Elektrodeneinheiten werden häufig in einem Kunststoffrahmen gehalten, was mit zusätzlichem Kostenaufwand für den Rahmen und das Montageverfahren verbunden ist. Die Größe und die Herstellungserfordernisse solcher Elektrodeneinheiten stehen einer platzsparenden Geometrie von Redox-Flow-Zellen und deren rationeller industrieller Fertigung derzeit im Wege.

Es ist Aufgabe der Erfindung, eine Elektrodeneinheit für eine Redox-Flow-Zelle bereitzustellen, die bei geringen Dicken-Abmessungen einfach herzustellen ist. Weiterhin ist es Aufgabe der Erfindung eine Redox-Flow-Zelle mit einer solchen Elektrodeneinheit bereitzustellen.

Die Aufgabe wird für die Elektrodeneinheit einer Redox-Flow-Zelle, umfassend zumindest ein metallisches Substrat und eine Beschichtung, welche auf dem Substrat aufgebracht ist, dadurch gelöst, dass die Beschichtung mindestens eine Schutzschicht auf ihrer dem Substrat abgewandten Seite umfasst, die aus Titanniobnitrid (TiNbN) und/oder Titanniobkarbid (TiNbC) gebildet ist.

Bisher wurden metallische Substrate für Elektrodeneinheiten von Redox-Flow-Zellen nicht erfolgreich eingesetzt, da diese sich in den verwendeten Elektrolyten nicht als ausreichend korrosions- und damit langzeitstabil erwiesen haben. Der Einsatz eines metallischen Substrats ist erfindungsgemäß nun durch die genannte Beschichtung möglich. Der Einsatz der Elektrodeneinheit ermöglicht geringe Abstände zur Membran und damit einen platzsparenden Aufbau einer Redox-Flow-Zelle.

Die Elektrodeneinheit mit metallischem Substrat ist undurchlässig für die Elektrolyte, so dass eine einwandfreie Trennung der Reaktionsräume innerhalb einer Redox-Flow-Zelle gewährleistet ist. Gleichzeitig weisen derartige Elektrodeneinheiten Oberflächen auf, die neben den hohen Anforderungen an die elektrochemische Stabilität auch den Forderungen nach einem niedrigen Grenzflächenwiderstand sowie hoher katalytischer Aktivität gerecht werden.

Es hat sich bewährt, wenn lediglich eine Schutzschicht aus TiNbN oder aus TiNbC die Beschichtung bildet. Es können aber auch Einzelschichten aus TiNbN und TiNbC abwechselnd nacheinander zur Bildung einer Schutzschicht auf das Substrat gebracht sein oder es kann eine Mischung aus TiNbN und TiNbC innerhalb einer Einzelschicht als Schutzschicht vorliegen.

Die Schutzschicht weist vorzugsweise eine Schichtdicke im Bereich von 50 - 400 nm, insbesondere von 200 - 300 nm auf.

In einer Ausführungsform einer Elektrodeneinheit umfasst die Beschichtung weiterhin mindestens eine Haftvermittlerschicht, die zwischen der Schutzschicht und dem Substrat angeordnet ist. Die mindestens eine Haftvermittlerschicht ist vorzugsweise metallisch ausgebildet. Insbesondere hat sich eine metallische Haftvermittlerschicht aus Titanniob (TiNb) bewährt. Die Haftvermittlerschicht weist vorzugsweise eine Schichtdicke im Bereich von 1 bis 100 nm auf.

Es hat sich bewährt, wenn das Substrat aus Edelstahl, 16MnCr5 oder einem Wälzlagerstahl gebildet ist. Insbesondere haben sich 100Cr6 oder Stahl vom Typ 1.4404 bewährt.

Das metallische Substrat ist vorzugsweise durch ein Metallblech oder eine Metallplatte mit einer Dicke von maximal 1 mm, insbesondere von maximal 0,5 mm, gebildet. Die industrielle Verarbeitung von großflächigen Metallblechen oder dünnen metallischen Platten ist kostengünstig ausführbar. Das Substrat ist undurchlässig für die Elektrolyte, ist also nicht porös und kann als ein einteiliges Bauteil ausgeführt werden.

Bevorzugt weist das Substrat einseitig oder vorzugsweise beidseitig zumindest bereichsweise eine dreidimensionale Profilierung unter Ausbildung eines Flussfeldes auf. Die Einbringung eines solches Flussfeldes in ein metallisches Substrat ist durch Prägen oder dergleichen in kostengünstiger Weise möglich. Ein solches Flussfeld lenkt die Strömung des Elektrolyten in definierte Bahnen und ist gleichbedeutend mit einer dreidimensionalen Struktur im Bereich der Oberfläche des Substrats. Es sorgt für eine homogene Verteilung und Strömung des Elektrolyten an und entlang der Membran.

Die Beschichtung ist vorzugsweise mittels eines PVD-Verfahrens oder eines kombinierten PVD/PACVD-Verfahrens auf dem Substrat gebildet. Dabei ist es von Vorteil, wenn die Beschichtung möglichst porenfrei abgeschieden ist oder zumindest nur Poren mit einem Durchmesser kleiner 0,1 mm aufweist, um einen korrosiven Angriff des Elektrolyten auf das metallische Substrat zu verhindern.

Es hat sich bewährt, wenn die Beschichtung insgesamt eine Dicke im Bereich von 200 bis 550 nm aufweist.

Es hat sich bewährt, wenn die Beschichtung das Substrat zumindest einseitig, bevorzugt beid- oder allseitig bedeckt. Insbesondere im Bereich der Kanten eines plattenförmigen Substrats können unbeschichtete Bereiche oder Bereiche mit sehr geringer Schichtdicke vorliegen, die allerdings üblicherweise aufgrund der Trennung der Elektrolyträume nicht in Kontakt mit einem Elektrolyten stehen und daher unkritisch sind. Zumindest sollte die Beschichtung das Substrat in einem Kontaktbereich zu einem Elektrolyten der Redox-Flow-Zelle bedecken, also in einem Bereich, der in direktem Kontakt zu einem Anolyten oder Katholyten eingesetzt wird.

Nachfolgend sind einige bevorzugte Beispiele für Beschichtungen auf metallischen Substraten zur Ausbildung von erfindungsgemäßen Elektrodeneinheiten aufgeführt:
Beispiel 1
   Metallisches Substrat: 16MnCr5
   Haftvermittlerschicht: keine
   Schutzschicht: TiNbN oder TiNbC
Beispiel 2
   Metallisches Substrat: 100Cr6
   Haftvermittlerschicht: TiNb
   Schutzschicht: TiNbN oder TiNbC

Die Aufgabe wird für eine Redox-Flow-Zelle, insbesondere Redox-Flow-Batterie, umfassend mindestens eine erfindungsgemäße Elektrodeneinheit gelöst. Insbesondere Flussbatterien mit wässrigen Elektrolyten umfassend eine redox-aktive Spezie auf der Anolyt-Seite sind bevorzugte Anwendungen für die erfindungsgemäßen Elektrodeneinheiten.

Bevorzugt umfasst die Redox-Flow-Zelle dabei mindestens zwei Elektrodeneinheiten, einen ersten Reaktionsraum und einen zweiten Reaktionsraum, wobei jeder Reaktionsraum in Kontakt mit einer der Elektrodeneinheiten steht und wobei die Reaktionsräume durch eine Polymerelektrolytmembran voneinander getrennt sind.

Es können aufgrund der geringen möglichen Dicken der Elektrodeneinheiten kleinbauende Redox-Flow-Batterien hergestellt werden, die zudem einen geringen Herstellungspreis aufweisen. So werden zur Ausbildung einer Redox-Flow-Batterie bevorzugt mehr als 10, insbesondere mehr als 50 Redox-Flow-Zellen elektrisch miteinander verschaltet eingesetzt.

Als für eine Redox-Flow-Zelle oder eine Redox-Flow-Batterie geeigneter Anolyt wird hier beispielhaft genannt:
1.4 M 7,8-Dihydroxyphenazin-2-sulfonsäure (kurz: DHPS)
gelöst in 1 molarer Natronlauge

Als für eine Redox-Flow-Zelle oder eine Redox-Flow-Batterie geeigneter Katholyt wird hier beispielhaft genannt:
0.31 M Kaliumhexacyanoferrat(II) und 0.31 M Kaliumhexacyanoferrat(III)
gelöst in 2 molarer Natronlauge.

Es werden bevorzugt Elektrolyt-Kombinationen mit wässrigen Elektrolyten mit einer redox-aktiven organischen Spezies auf der Anolyt-Seite zur Bildung einer Redox-Flow-Zelle oder einer Redox-Flow-Batterie verwendet.

Die Figuren 1 bis 6 zeigen beispielhaft Elektrodeneinheiten und eine Redox-Flow-Zelle beziehungsweise eine Redox-Flow-Batterie. So zeigt
- Figur 1: eine Elektrodeneinheit umfassend ein metallisches Substrat mit einer Beschichtung,
- Figur 2: einen Querschnitt durch die erfindungsgemäße Elektrodeneinheit nach Figur 1,
- Figur 3: einen Querschnitt durch eine nicht erfindungsgemäße Elektrodeneinheit,
- Figur 4: einen Querschnitt durch eine weitere erfindungsgemäße Elektrodeneinheit, und
- Figur 5: eine Elektrodeneinheit mit einem Flussfeld,
- Figur 6: eine Redox-Flow-Zelle beziehungsweise eine Redox-Flow-Batterie mit einer Redox-Flow-Zelle.

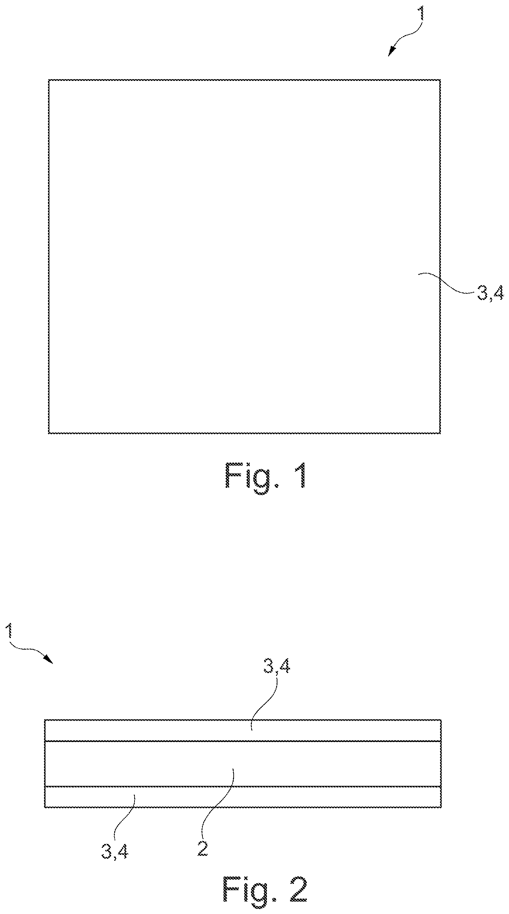

Figur 1 zeigt eine erfindungsgemäße Elektrodeneinheit 1 umfassend ein metallisches Substrat 2, insbesondere aus Stahlblech der Sorte 1.4404 in einer Dicke kleiner 0,5 mm, mit einer Beschichtung 3, die beidseitig auf das Substrat 2 aufgebracht ist. Die Beschichtung 3 umfasst hier lediglich eine Schutzschicht 4 aus TiNbN.

Figur 2 zeigt einen Querschnitt durch die Elektrodeneinheit 1 nach Figur 1. Gleiche Bezugszeichen wie in Figur 1 kennzeichnen gleiche Elemente.

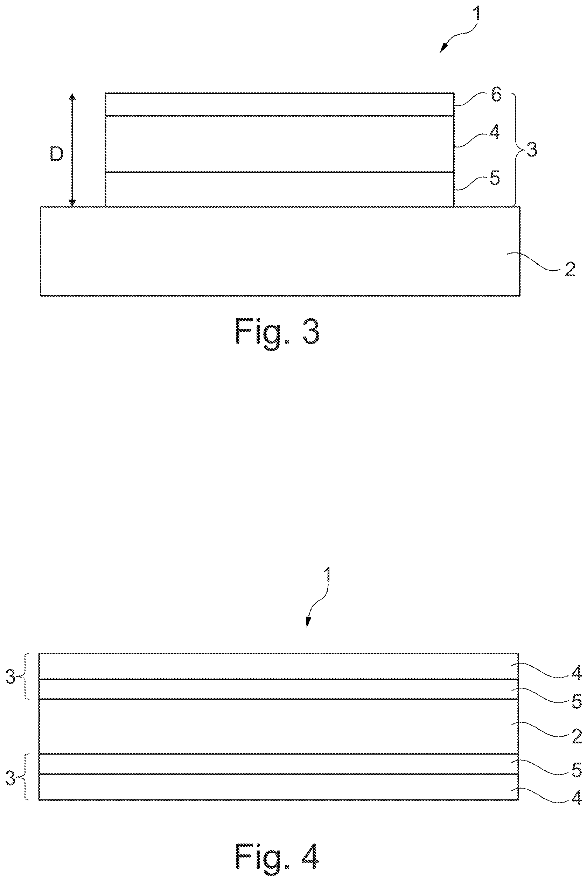

Figur 3 zeigt einen Querschnitt durch eine nicht erfindungsgemäße Elektrodeneinheit 1 umfassend ein metallisches Substrat 2 und eine Beschichtung 3, die einseitig auf das Substrat 2 aufgebracht ist. Die Beschichtung 3 umfasst hier eine Haftvermittlerschicht 5 aus TiNb, eine Schutzschicht 4 aus TiNbN und eine Deckschicht 6 aus IrC oder reinem Kohlenstoff.

Figur 4 zeigt einen Querschnitt durch eine weitere erfindungsgemäße Elektrodeneinheit 1 umfassend ein metallisches Substrat 2 und eine Beschichtung 3, die beidseitig auf das Substrat 2 aufgebracht ist. Die Beschichtung 3 umfasst hier eine Haftvermittlerschicht 5 aus TiNb und eine Schutzschicht 4 aus TiNbC.

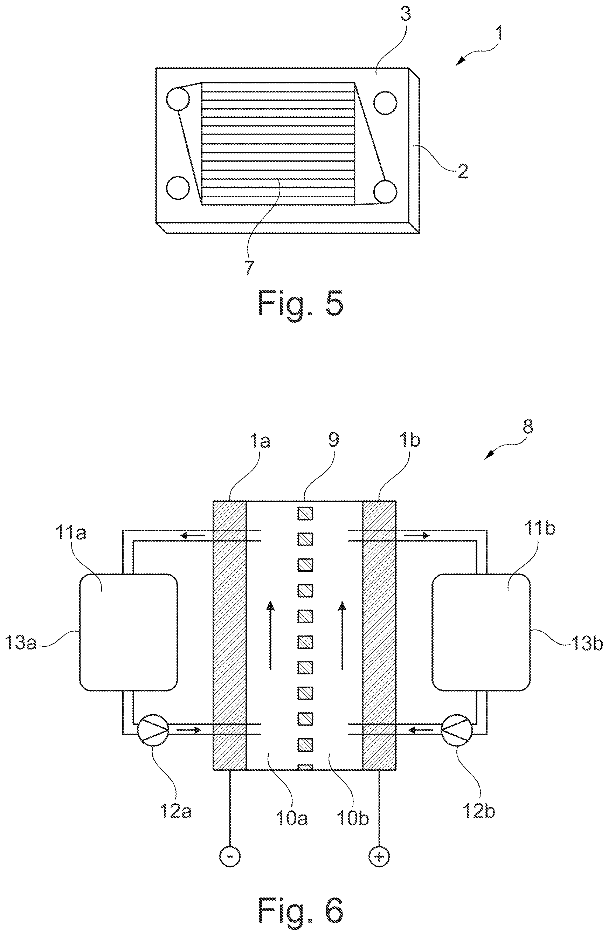

Figur 5 zeigt eine Elektrodeneinheit 1 in dreidimensionaler Ansicht umfassend ein Substrat und eine Beschichtung 3. In das Substrat 2 ist beidseitig ein Flussfeld 7 eingeprägt, so dass eine dreidimensionale Strukturierung der Oberfläche der Elektrodeneinheit 1 resultiert.

Figur 6 zeigt eine Redox-Flow-Zelle 8 beziehungsweise eine Redox-Flow-Batterie mit einer Redox-Flow-Zelle 8. Die Redox-Flow-Zelle 8 umfasst zwei Elektrodeneinheiten 1a, 1b, einen ersten Reaktionsraum 10a und einen zweiten Reaktionsraum 10b, wobei jeder Reaktionsraum 10a, 10b in Kontakt mit einer der Elektrodeneinheiten 1a, 1b steht. Die Reaktionsräume 10a, 10b sind durch eine Polymerelektrolytmembran 9 voneinander getrennt. Ein flüssiger Anolyt 11a wird aus einem Tank 13a über eine Pumpe 12a in den ersten Reaktionsraum 10a gepumpt und zwischen der Elektrodeneinheit 1a und der Polymerelektrolytmembran 9 hindurchgeführt. Ein flüssiger Katholyt 11b wird aus einem Tank 13b über eine Pumpe 12b in den zweiten Reaktionsraum 10b gepumpt und zwischen der Elektrodeneinheit 1b und der Polymerelektrolytmembran 9 hindurchgeführt. Es erfolgt ein Ionentausch über die Polymerelektrolytmembran 9 hinweg, wobei aufgrund der Redox-Reaktion and den Elektrodeneinheiten 1a, 1b elektrische Energie frei wird.

### Bezugszeichenliste

- 1, 1a, 1b: Elektrodeneinheit
- 2: metallisches Substrat
- 3: Beschichtung
- 4: Schutzschicht
- 5: Haftvermittlerschicht
- 6: Deckschicht
- 7: Flussfeld
- 8: Redox-Flow-Zelle oder Redox-Flow-Batterie
- 9: Polymerelektrolytmembran
- 10a: erster Reaktionsraum
- 10b: zweiter Reaktionsraum
- 11a: Anolyt
- 11b: Katholyt
- 12a, 12b: Pumpe
- 13a, 13b: Tank
- D: Dicke der Beschichtung

## Patentansprüche

1. Elektrodeneinheit (1, 1a, 1b) einer Redox-Flow-Zelle (8), umfassend zumindest ein metallisches Substrat (2) und eine Beschichtung (3), welche auf dem Substrat (2) aufgebracht ist, **dadurch gekennzeichnet, dass** die Beschichtung (3) mindestens eine Schutzschicht (4) auf ihrer dem Substrat (2) abgewandten Seite umfasst, die aus Titanniobnitrid (TiNbN) und/oder Titanniobkarbid (TiNbC) gebildet ist.

2. Elektrodeneinheit (1, 1a, 1b) nach Anspruch 1, **dadurch gekennzeichnet, dass** die Beschichtung (3) weiterhin mindestens eine Haftvermittlerschicht (5) umfasst, die zwischen der Schutzschicht (4) und dem Substrat (2) angeordnet ist.

3. Elektrodeneinheit (1, 1a, 1b) nach Anspruch 2, **dadurch gekennzeichnet, dass** die mindestens eine Haftvermittlerschicht (5) metallisch ausgebildet ist, insbesondere aus Titanniob (TiNb) gebildet ist.

4. Elektrodeneinheit (1, 1a, 1b) nach einem der Ansprüche 1 bis 3, **dadurch gekennzeichnet, dass** das Substrat (2) aus Edelstahl, 16MnCr5 oder einem Wälzlagerstahl gebildet ist.

5. Elektrodeneinheit (1, 1a, 1b) nach einem der Ansprüche 1 bis 4, **dadurch gekennzeichnet, dass** das Substrat (2) durch ein Metallblech oder eine Metallplatte mit einer Dicke von maximal 1 mm gebildet ist.

6. Elektrodeneinheit (1, 1a, 1b) nach einem der Ansprüche 1 bis 5, **dadurch gekennzeichnet, dass** das Substrat ein- oder beidseitig zumindest bereichsweise eine dreidimensionale Profilierung unter Ausbildung eines Flussfeldes (7) aufweist.

7. Elektrodeneinheit (1, 1a, 1b) nach einem der Ansprüche 1 bis 6, **dadurch gekennzeichnet, dass** die Beschichtung (3) mittels eines PVD-Verfahrens oder eines kombinierten PVD/PACVD-Verfahrens auf dem Substrat (2) gebildet ist.

8. Elektrodeneinheit (1, 1a, 1b) nach einem der Ansprüche 1 bis 7, **dadurch gekennzeichnet, dass** die Beschichtung (2) insgesamt eine Dicke (D) im Bereich von 200 bis 550 nm aufweist.

9. Elektrodeneinheit (1, 1a, 1b) nach einem der Ansprüche 1 bis 8, **dadurch gekennzeichnet, dass** die Beschichtung (3) das Substrat (2) zumindest in einem Kontaktbereich zu einem Elektrolyten der Redox-Flow-Zelle (8) bedeckt.

10. Redox-Flow-Zelle (8), insbesondere Redox-Flow-Batterie, umfassend mindestens eine Elektrodeneinheit (1, 1a, 1b) nach einem der Ansprüche 1 bis 9.

11. Redox-Flow-Zelle (8) nach Anspruch 10, umfassend mindestens zwei Elektrodeneinheiten (1a, 1b), einen ersten Reaktionsraum (10a) und einen zweiten Reaktionsraum (10b), wobei jeder Reaktionsraum (10a, 10b) in Kontakt mit einer der Elektrodeneinheiten (1a, 1b) steht und wobei die Reaktionsräume (10a, 10b) durch eine Polymerelektrolytmembran (9) voneinander getrennt sind.

## Claims

1. An electrode unit (1, 1a, 1b) of a redox flow cell (8), comprising at least one metallic substrate (2) and a coating (3) which is applied to the substrate (2), **characterised in that** the coating (3) comprises at least one protective layer (4) on its side facing away from the substrate (2), which is formed from titanium-niobium nitride (TiNbN) and/or titanium-niobium carbide (TiNbC).

2. The electrode unit (1, 1a, 1b) according to claim 1, **characterised in that** the coating (3) further comprises at least one adhesion promoting layer (5) arranged between the protective layer (4) and the substrate (2).

3. The electrode unit (1, 1a, 1b) according to claim 2, **characterised in that** the at least one adhesion promoting layer (5) is metallic, in particular formed from titanium niobium (TiNb).

4. The electrode unit (1, 1a, 1b) according to any one of claims 1 to 3, **characterised in that** the substrate (2) is formed from stainless steel, 16MnCr5 or a rolling bearing steel.

5. The electrode unit (1, 1a, 1b) according to any one of claims 1 to 4, **characterised in that** the substrate (2) is formed by a metal sheet or a metal plate having a maximum thickness of 1 mm.

6. The electrode unit (1, 1a, 1b) according to any one of claims 1 to 5, **characterised in that** the substrate has a three-dimensional profiling on one or both sides, at least in regions, forming a flow field (7).

7. The electrode unit (1, 1a, 1b) according to any one of claims 1 to 6, **characterised in that** the coating (3) is formed on the substrate (2) by means of a PVD process or a combined PVD/PACVD process.

8. The electrode unit (1, 1a, 1b) according to any one of claims 1 to 7, **characterised in that** the coating (2) has an overall thickness (D) in the range from 200 to 550 nm.

9. The electrode unit (1, 1a, 1b) according to any one of claims 1 to 8, **characterised in that** the coating (3) covers the substrate (2) at least in a contact region to an electrolyte of the redox flow cell (8).

10. A redox flow cell (8), in particular a redox flow battery, comprising at least one electrode unit (1, 1a, 1b) according to any one of claims 1 to 9.

11. The redox flow cell (8) according to claim 10, comprising at least two electrode units (1a, 1b), a first reaction chamber (10a) and a second reaction chamber (10b), wherein each of the reaction chambers (10a, 10b) is in contact with one of the electrode units (1a, 1b) and wherein the reaction chambers (10a, 10b) are separated from each other by a polymer electrolyte membrane (9).

## Revendications

1. Unité d'électrode (1, 1a, 1b) d'une cellule à flux redox (8), comprenant au moins un substrat métallique (2) et un revêtement (3) qui est appliqué sur le substrat (2), **caractérisée en ce que** le revêtement (3) comprend au moins une couche de protection (4) sur sa face opposée au substrat (2), qui est formé à partir de de nitrure de niobium-titane (NbTiN) et/ou de carbure de niobium-titane (NbTiC).

2. Unité d'électrode (1, 1a, 1b) selon la revendication 1, **caractérisée en ce que** le revêtement (3) comprend en outre au moins une couche auxiliaire d'adhérence (5) qui est agencée entre la couche de protection (4) et le substrat (2).

3. Unité d'électrode (1, 1a, 1b) selon la revendication 2, **caractérisée en ce que** l'au moins une couche auxiliaire d'adhérence (5) est formée métallique, notamment formée de niobium-titane (NbTi).

4. Unité d'électrode (1, 1a, 1b) selon l'une des revendications 1 à 3, **caractérisée en ce que** le substrat (2) est formé d'acier inoxydable, de 16MnCr5 ou d'un acier à roulement.

5. Unité d'électrode (1, 1a, 1b) selon l'une des revendications 1 à 4, **caractérisée en ce que** le substrat (2) est formé par une tôle ou une plaque métallique d'une épaisseur maximale de 1 mm.

6. Unité d'électrode (1, 1a, 1b) selon l'une des revendications 1 à 5, **caractérisée en ce que** le substrat présente un profilage tridimensionnel sur un ou les deux côtés, au moins par zones, formant un champ d'écoulement (7).

7. Unité d'électrode (1, 1a, 1b) selon l'une des revendications 1 à 6, **caractérisée en ce que** le revêtement (3) est formé sur le substrat (2) au moyen d'un procédé PVD ou d'un procédé combiné PVD/PACVD.

8. Unité d'électrode (1, 1a, 1b) selon l'une des revendications 1 à 7, **caractérisée en ce que** le revêtement (2) a une épaisseur totale (D) dans la plage de 200 à 550 nm.

9. Unité d'électrode (1, 1a, 1b) selon l'une des revendications 1 à 8, **caractérisée en ce que** le revêtement (3) recouvre le substrat (2) au moins dans une zone de contact avec un électrolyte de la cellule à flux redox (8).

10. Cellule à flux redox (8), en particulier batterie à flux redox, comprenant au moins une unité d'électrode (1, 1a, 1b) selon l'une des revendications 1 à 9.

11. Cellule à flux redox (8) selon la revendication 10, comprenant au moins deux unités d'électrode (1a, 1b), un premier espace de réaction (10a) et un second espace de réaction (10b), chaque espace de réaction (10a, 10b) étant en contact avec l'une des unités d'électrode (1a, 1b) et dans lequel les espaces de réaction (10a, 10b) sont séparés l'un de l'autre par une membrane électrolytique polymère (9).
